# EUROPÄISCHE PATENTANMELDUNG

(11) **EP 4 389 690 A1**
(43) Veröffentlichungstag der Anmeldung: **26.06.2024**
(21) Anmeldenummer: 23213969.1
(22) Anmeldetag: 04.12.2023
(51) Int. Cl.: B67C 3/00, G01N 21/90

(54) **VERFAHREN UND VORRICHTUNG ZUR ÜBERPRÜFUNG VON MIT FLÜSSIGKEIT BEFÜLLTEN BEHÄLTNISSEN**

(30) Priorität: 23.12.2022 DE 102022134743
(71) Anmelder: Krones AG, 93073 Neutraubling (DE)
(72) Erfinder: Lindner, Peter, 93073 Neutraubling (DE)
(74) Vertreter: Bittner, Bernhard

(57) **Zusammenfassung**

Verfahren zur Überprüfung von mit Flüssigkeiten befüllten Behältnissen (10), wobei die Behältnisse (10) mittels einer Transporteinrichtung (2) entlang eines vorgegebenen Transportpfades transportiert werden und wobei in einem ersten Identifikationsschritt (I1) wenigstens ein an dem Behältnis (10) angeordnetes Identifikationselement (12) inspiziert und/oder an dem Behältnis ein Identifikationselement (12) wird und anhand dieses Identifikationselements (12) wenigstens ein erster Parameter erfasst wird, der für dieses befüllte Behältnis charakteristisch ist, wobei dieser wenigstens eine Parameter für die in dem Behältnis gewünschte Flüssigkeit charakteristisch ist, dadurch gekennzeichnet, dass in einem Inspektionsschritt (I2) wenigstens ein weiterer für die tatsächlich in dem Behältnis befindliche Flüssigkeit charakteristischer Parameter ermittelt wird.

## Beschreibung

Die vorliegende Erfindung bezieht sich auf ein Verfahren und eine Vorrichtung zur Überprüfung von mit Flüssigkeit befüllten Behältnissen.

Aus dem Stand der Technik ist es seit langem bekannt, mit Flüssigkeit befüllte Behältnisse in mehrfacher Hinsicht zu überprüfen, beispielsweise auf einen korrekten Sitz eines Verschlusses, auf eine korrekte Füllhöhe oder auch auf korrekt angebrachte Etiketten.

In jüngerer Zeit ist man bestrebt, die Ausstattungen von Behältnissen, d. h. Bedruckungen, Etiketten und dergleichen zu minimieren, um so Umweltschutzaspekten gerecht zu werden. So wäre es beispielsweise wünschenswert, auf die Etikettierung von Behältnissen zu verzichten, um eben diese Etiketten einzusparen aber auch um das Recyceln derartiger Behältnisse zu erleichtern.

Der Nachteil dieser Einsparungen liegt darin, dass es oftmals schwierig ist, festzustellen bzw. zu validieren, ob sich in einem bestimmten Behältnis die dafür vorgesehene Flüssigkeit befindet. So ist es aus dem internen Stand der Technik der Anmelderin beispielsweise bekannt, an einem Behältnis kein Etikett, sondern einen Code, beispielsweise einen mehrdimensionalen Code anzubringen. Dabei wird der Behälterinhalt in den Matrixcode eincodiert und kann beispielsweise über eine tragbare Vorrichtung kontrolliert und/oder ausgelesen werden.

Es kann davon ausgegangen werden, dass diese Art der Kennzeichnung in Zukunft auch bei anderen Produkten Anwendung findet, wie beispielsweise bei Süßgetränken.

Allerdings ist es im Stand der Technik derzeit nicht möglich, nach dem Befüllen und Verschließen zu verifizieren, welche Flüssigkeit sich tatsächlich in dem Behältnis befindet. Bei bestimmten Behältnissen ist auch nicht von außen ersichtlich, welche Art der Flüssigkeit sich darin befindet, beispielsweise karbonisiertes Wasser oder Zitronenlimonade.

Aus der DE 10 2019 215 692 84 ist es bekannt, ein bereits abgefülltes Produkt zu inspizieren. Die US 2019/0031383 A1 beschreibt ein Verfahren zur Herstellung von Behältnissen mit einer Markierung der Behältnisse.

Der vorliegenden Erfindung liegt daher die Aufgabe zugrunde, auch bei minimal oder geringfügig ausgestatteten Behältnissen eine Verifizierung hinsichtlich des abgefüllten Getränks bzw. einer abgefüllten Flüssigkeit durchzuführen. Dies wird erfindungsgemäß durch die Gegenstände der unabhängigen Patentansprüche erreicht. Vorteilhafte Ausführungsformen und Weiterbildungen sind Gegenstand der Unteransprüche.

Bei einem erfindungsgemäßen Verfahren zur Überprüfung von mit Flüssigkeit befüllten Behältnissen werden diese Behältnisse mittels einer Transporteinrichtung entlang eines vorgegebenen Transportpfads transportiert und es wird in einem Identifikationsschritt wenigstens ein an dem Behältnis angeordnetes Identifikationselement inspiziert und/oder aufgebracht (bzw. angebracht).

Anhand dieses Identifikationselements wird wenigstens ein erster Parameter erfasst, der für dieses befüllte Behältnis charakteristisch ist. Dabei ist dieser wenigstens eine Parameter für die in dem Behältnis gewünschte Flüssigkeit charakteristisch. Das erste Identifikationselement kann dabei an dem Behältnis selbst angeordnet sein und/oder an einem an dem Behältnis angeordneten Element wie insbesondere aber nicht ausschließlich einem Behältnisverschluss mit vorzugsweise einem Originalitätssicherungselement.

Erfindungsgemäß wird in einem Inspektionsschritt wenigstens ein (weiterer) für die tatsächlich in dem Behältnis befindliche Flüssigkeit charakteristischer Parameter ermittelt.

Es ist dabei möglich, dass ein bereits an dem Behältnis befindliches Identifikationselement inspiziert wird (und so das Behältnis identifiziert wird).

Es wäre jedoch auch möglich, dass ein Identifikationselement oder ein Element mit einem Identifikationselement an dem Behältnis angebracht wird, wie etwa ein Behältnisverschluss, der ein solches Identifikationselement aufweist. Auch in diesem Fall ist nach der Anbringung des Identifikationselements an dem Behältnis dieses Identifikationselement bekannt (ohne nochmals ausgelesen werden zu müssen).

Es wird daher ermittelt anhand eines Ausstattungsmerkmals wie etwa eines Verschlusses festgestellt, welche Flüssigkeit sich in diesem Behältnis befinden soll. Anschließend oder einem anderen Verfahrensschritt wird verifiziert, ob sich tatsächlich diese Flüssigkeit in dem Behältnis befindet.

Damit ist zwar dieser erste Parameter, der für die Flüssigkeit charakteristisch ist, aus dem Identifikationselement entnehmbar, garantiert aber noch nicht, ob sich tatsächlich diese Flüssigkeit in dem Behältnis befindet. Bevorzugt wird daher zweimal ein Parameter bestimmt, der für die Flüssigkeit charakteristisch ist, wobei im Prinzip der erste Parameter für eine "Sollflüssigkeit" charakteristisch ist, und der zweite Parameter für die tatsächlich in dem Behältnis befindliche Flüssigkeit also eine "Istflüssigkeit".

Bevorzugt handelt es sich bei dem Behältnis um ein Getränkebehältnis, um ein Behältnis für medizinische oder Health Care Anwendungen oder um ein Behältnis für den pharmazeutischen Bereich.

Bei der Flüssigkeit handelt es sich insbesondere um ein Getränk, ein Medikament oder um ein Health Care Produkt.

Bevorzugt ist das Identifikationselement berührungslos und insbesondere optisch identifizierbar. Besonders bevorzugt identifiziert das Identifikationselement das Behältnis eindeutig.

Es wird damit vorgeschlagen, an dem Behältnis und insbesondere dem bereits befüllten und verschlossenen Behältnis eine Identifikation vorzunehmen. Dabei ist es zunächst denkbar, dass in einem ersten Schritt eine Lesbarkeitskontrolle des Identifikationselements, beispielsweise eines Matrixcodes durchgeführt wird. Bevorzugt werden dabei die ausgelesenen Daten, wie unten genauer erwähnt beispielsweise die Art des Produktes, ein Haltbarkeitsdatum, abfülllinienbezogene Daten und dergleichen auf ihre Gültigkeit überprüft.

In einem weiteren Schritt wird das Ergebnis der Überprüfung des Identifikationselements - besonders bevorzugt mit einem Inspektionssystem - verifiziert, d. h. insbesondere mit einem unabhängigen Inspektionssystem, welches den Inhalt des Behältnisses bestimmt.

Bevorzugt wird dabei verfahrensseitig zunächst das Identifikationselement ausgelesen (oder ein bekanntes Identifikationselement an dem Behältnis angeordnet) und anschließend die Flüssigkeit verifiziert. Es wäre jedoch auch denkbar, dass zunächst der zweite Parameter bestimmt wird, der für die tatsächlich in dem Behältnis befindliche Flüssigkeit charakteristisch ist und erst anschließend das erste Identifikationselement ausgelesen (oder das Identifikationselement an dem Behältnis angeordnet) wird. Auch wäre es möglich, dass der erste und der zweite Parameter im Wesentlichen zeitgleich aufgenommen werden.

Bei einem weiteren bevorzugten Verfahrensschritt wird daher überprüft, ob die in dem Behältnis gewünschte Flüssigkeit mit der tatsächlich in dem Behältnis befindlichen Flüssigkeit übereinstimmt. Zu diesem Zweck können die ersten und zweiten Parameter miteinander verglichen werden.

So kann beispielsweise anhand des Identifikationselements festgestellt werden, dass sich in dem Behältnis stilles Wasser befinden müsste. In einem weiteren Schritt kann beispielsweise spektroskopisch die tatsächliche Beschaffenheit des Produkts ermittelt werden und insbesondere ermittelt werden, ob die Ergebnisse der zweiten Inspektion ebenfalls darauf schließen lassen, dass sich in dem Behältnis tatsächlich stilles Wasser befindet.

Bei einem weiteren bevorzugten Verfahren erfolgt die Überprüfung, ob die in dem Behältnis gewünschte Flüssigkeit mit der tatsächlich in dem Behältnis befindlichen Flüssigkeit übereinstimmt unter Verwendung des ersten und des zweiten Parameters.

Bei einem weiteren bevorzugten Verfahren wird der weitere für die tatsächlich in dem Behältnis befindliche Flüssigkeit charakteristische Parameter durch eine Inspektion der Flüssigkeit bestimmt.

Insbesondere kann es sich dabei um eine optische Inspektion handeln und insbesondere um eine berührungslos erfolgende Inspektion. Dabei ist es möglich, dass die Flüssigkeit in einem Durchlichtverfahren inspiziert wird. Insbesondere wird die bereits in dem Behältnis befindliche Flüssigkeit inspiziert und insbesondere erfolgt diese Inspektion ohne eine Substanzeinwirkung auf das Behältnis und insbesondere ohne dass dieses wieder geöffnet wird.

Bei einem weiteren bevorzugten Verfahren wird der weitere für die tatsächlich in dem Behältnis befindliche Flüssigkeit charakteristische Parameter mittels einer Sensoreinrichtung ermittelt, welche aus einer Gruppe von Sensoreinrichtungen ausgewählt ist, welche Farbsensoreinrichtungen, Spektroskopieeinrichtungen, Laserinterferometrieeinrichtungen und dergleichen enthält.

Bei einem weiteren bevorzugten Verfahren sind der Identifikationsschritt und der Inspektionsschritt zeitlich versetzt zueinander und insbesondere erfolgt der Inspektionsschritt nach dem ersten Identifikationsschritt.

Bei einem weiteren bevorzugten Verfahren erfolgt eine Ausleitung des Behältnisses aus dem Behältnisstrom, wenn festgestellt wird, dass die in dem Behältnis gewünschte Flüssigkeit nicht mit der tatsächlich in dem Behältnis befindlichen Flüssigkeit übereinstimmt.

Dabei ist eine derartige Ausschleusung möglich, wenn die Flüssigkeiten tatsächlich nicht miteinander übereinstimmen, d. h. die "Sollflüssigkeit" mit der "Istflüssigkeit" nicht übereinstimmt.

Der Grund kann dafür liegen, dass beispielsweise ein falsches Getränk abgefüllt wurde, beispielsweise Wasser anstelle von Zitronenlimonade. Daneben kann aber auch eine Ausleitung erfolgen, wenn das tatsächlich inspizierte Behältnis bzw. die inspizierte Flüssigkeit nicht innerhalb bestimmter Grenzwerte liegt. Dabei ist es möglich, dass sich beispielsweise bestimmungsgemäß in dem Behältnis Wasser mit bestimmten chemischen Eigenschaften befinden soll, und in der tatsächlichen Inspektion festgestellt wird, dass die tatsächlichen Eigenschaften der Flüssigkeiten von den Solleigenschaften abweichen.

Bei einem bevorzugten Verfahren erfolgt die Ausleitung durch eine nachgeordnete Ausleiteinrichtung, welche die Ausleitung einzelner Behältnisse ermöglicht.

Bei einem weiteren bevorzugten Verfahren erfolgt ein geradliniger Transport der Behältnisse. Bei einem weiteren bevorzugten Verfahren erfolgt ein einreihiger Transport der Behältnisse. Besonders bevorzugt werden die auszuleitenden Behältnisse seitlich aus dem Transportstrom ausgestoßen.

Bei einem weiteren bevorzugten Verfahren erfolgt ein vereinzelter Transport der Behältnisse, d. h. diese Behältnisse haben bevorzugt in der Transportrichtung einen vorgegebenen Abstand zueinander. Besonders bevorzugt ist dieser vorgegebene Abstand größer als der halbe Behältnisdurchmesser, bevorzugt größer als der volle Behältnisdurchmesser.

Besonders bevorzugt ist dieser Abstand geringer als der fünffache Behältnisdurchmesser, bevorzugt geringer als der vierfache Behältnisdurchmesser, bevorzugt geringer als der dreifache Behältnisdurchmesser und bevorzugt geringer als der zweifache Behältnisdurchmesser. Diese Abstände haben sich als besonders bevorzugt erwiesen, um den zweiten Inspektionsschritt durchzuführen.

Bei einem weiteren bevorzugten Verfahren wird der Identifikationsschritt durch eine Triggereinrichtung ausgelöst. So kann eine Lichtschranke vorgesehen sein, welche den ersten Inspektionsschritt auslöst. Wie oben erwähnt kann es sich bei dem Identifikationsschritt auch um einen ersten Inspektionsschritt handeln, bei welchem das Identifikationselement inspiziert wird.

Bei einem weiteren bevorzugten Verfahren wird der (zweite) Inspektionsschritt durch eine Triggereinrichtung ausgelöst. So kann eine Lichtschranke vorgesehen sein, welche den (zweiten) Inspektionsschritt auslöst.

Besonders bevorzugt werden anhand des Identifikationselements wenigstens zwei und bevorzugt eine Vielzahl von Parametern erfasst, die für das Behältnis und/oder die darin befindliche Flüssigkeit charakteristisch sind.

Dabei sind bevorzugt die Parameter charakteristisch für eine Eigenschaft, die aus einer Gruppe von Eigenschaften ausgewählt ist, welche abfülllinienbezogene Daten, Mindesthaltbarkeitsdaten und dergleichen enthält.

Bei einem weiteren bevorzugten Verfahren werden wenigstens teilweise die Parameter mit gespeicherten Daten verglichen. Dabei können die gespeicherten Daten beispielsweise in einer Maschinensteuerung gespeichert sein, in einem Behandlungsrezept, in einer Cloud oder dergleichen. Auf diese Weise kann festgestellt werden, ob beispielsweise ein korrektes Haltbarkeitsdatum angegeben ist und dergleichen.

Bei einem weiteren bevorzugten Verfahren werden die aus dem Informationselement ermittelten Parameter wenigstens zeitweise gespeichert, in einer Cloud oder dergleichen. Bevorzugt werden diese Parameter dem inspizierten Behältnis zugeordnet. Besonders bevorzugt ist jedes Behältnis mit einem eindeutigen Code individualisiert.

Bei einem weiteren erfindungsgemäßen Verfahren ist das Identifikationselement aus einer Gruppe von Identifikationselementen ausgewählt, welche Barcodes, Matrixcodes, Smartlabels, farblich codierte Verschlüsse und dergleichen enthält.

Bei einem weiteren bevorzugten Verfahren ist das Identifikationselement an einem Behältnisverschluss des Behältnisses angeordnet. Insbesondere ist das Identifikationselement an einer Oberseite des Behältnisverschlusses angeordnet. Bevorzugt findet eine Inspektion der Behältnisse von oberhalb der Behältnisse her statt.

Bei einem weiteren bevorzugten Verfahren wird das Identifikationselement vor dem Aufbringen auf den Behälter identifiziert. Besonders bevorzugt besteht eine eindeutige feste Zuordnung von Maschinenteilung zu Verschlusselement.

Die vorliegende Erfindung ist weiterhin auf eine Vorrichtung zur Überprüfung von mit Flüssigkeiten befüllten Behältnissen gerichtet, welche eine Transporteinrichtung aufweist, welche die Behältnisse entlang eines vorgegebenen Transportpfads und/oder entlang einer vorgegebenen Transportrichtung transportiert. Weiterhin weist die Vorrichtung eine Identifikationseinrichtung auf, welche dazu geeignet und bestimmt ist, ein an dem Behältnis angeordnetes Identifikationselement zu inspizieren oder an dem Behältnis ein Identifikationselement anzubringen, wobei anhand dieses Identifikationselements wenigstens ein erster Parameter erfassbar und/oder ermittelbar ist, der für dieses befüllte Behältnis charakteristisch ist, wobei der wenigstens eine Parameter für die in dem Behältnis gewünschte Flüssigkeit charakteristisch ist.

Erfindungsgemäß weist die Vorrichtung eine Inspektionseinrichtung auf, welche dazu geeignet und bestimmt ist, wenigstens einen weiteren für die tatsächlich in dem Behältnis befindliche Flüssigkeit charakteristischen Parameter zu ermitteln.

Bei einer weiteren vorteilhaften Ausführungsform weist die Vorrichtung eine Auswerteeinrichtung auf, welche dazu geeignet und bestimmt ist, anhand des ersten Parameters und zweiten Parameters zu überprüfen, ob die in dem Behältnis gewünschte Flüssigkeit mit der in dem Behältnis befindlichen Flüssigkeit übereinstimmt. Dabei kann diese Auswerteeinrichtung eine Vergleichseinrichtung aufweisen, welche den ersten Parameter (oder aus diesem ersten Parameter abgeleitete Daten) mit dem zweiten Parameter (oder aus diesem zweiten Parameter abgeleiteten Daten) vergleicht.

Bei einer weiteren vorteilhaften Ausführungsform weist die Vorrichtung eine Ausleiteinrichtung auf, welche dazu geeignet und bestimmt ist, einzelne Behältnisse aus dem Transportstrom der Behältnisse auszuleiten.

Besonders bevorzugt transportiert die Transporteinrichtung die Behältnisse entlang einer geradlinigen Richtung. Besonders bevorzugt weist die Transporteinrichtung ein Transportband auf, auf dem bevorzugt die Behältnisse aufrecht stehend transportiert werden.

Bei einer weiteren vorteilhaften Ausführungsform weist die zweite Inspektionseinrichtung eine Sensoreinrichtung auf, welche aus einer Gruppe von Sensoreinrichtungen ausgewählt ist, welche Farbsensoreinrichtungen, Spektroskopieeinrichtungen, Laserinterferometrieeinrichtungen und dergleichen enthält.

Die vorliegende Findung ist weiterhin auf ein Behältnis gerichtet, wobei dieses Behältnis mit einer Flüssigkeit und insbesondere einem Getränk befüllt ist und mit einem Verschluss verschlossen ist. Dabei ist an dem Behältnis und/oder dem Verschluss ein Identifikationselement angeordnet, welches dieses Behältnis identifiziert und wobei anhand dieses Identifikationselements wenigstens ein erster Parameter erfassbar ist, der für dieses befüllte Behältnis charakteristisch ist, wobei der wenigstens eine Parameter auch für die in dem Behältnis gewünschte Flüssigkeit charakteristisch ist.

Erfindungsgemäß ist ein Grundkörper des Behältnisses etikettenlos und/oder aufdruckslos ausgeführt, derart, dass die in dem Behältnis befindliche Flüssigkeit inspizierbar ist und insbesondere auch unabhängig von einer Drehstellung des Behältnisses bezüglich seiner Längsrichtung inspizierbar ist.

Weitere Vorteile und Ausführungsformen ergeben sich aus den beigefügten Zeichnungen:
Darin zeigen:
- Fig. 1: eine schematische Darstellung einer erfindungsgemäßen Vorrichtung; und
- Fig. 2: eine schematische Darstellung eines Behältnisses.

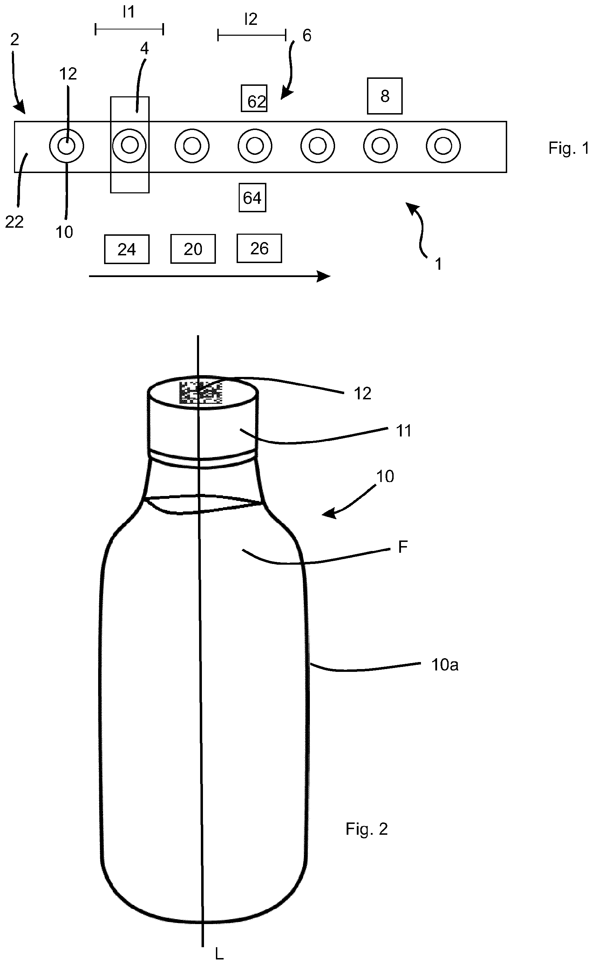

Fig. 1 zeigt eine erfindungsgemäße Vorrichtung 1 zur Überprüfung von mit Flüssigkeiten befüllten Behältnissen 10. Dabei bezieht sich das Bezugszeichen 2 auf eine Transporteinrichtung, welche die Behältnisse entlang eines Transportpfades bzw. einer Transportrichtung T, welche hier bevorzugt geradlinig ist, transportiert. Zu diesem Zweck weist die Transporteinrichtung 2 bevorzugt ein Transportband 22 auf, auf dem die Behältnisse 10 stehend transportiert werden. Das Bezugszeichen 12 kennzeichnet ein an den Behältnissen 10 angeordnetes Identifikationselement wie etwa einen Matrixcode.

Das Bezugszeichen 4 kennzeichnet eine Identifikationseinrichtung, welche im Rahmen eines ersten Identifikationsschritts I1 die Behältnisse inspiziert und dabei insbesondere das Identifikationselement 12 ausliest. Alternativ oder zusätzlich kann diese Identifikationseinrichtung auch an den Behältnissen jeweils ein Identifikationselement anbringen. Dabei ist es möglich, dass die Identifikationseinrichtung etwa an den Behältnissen mit den Identifikationselementen versehene Verschlüsse anbringt. Auch wäre es denkbar, dass die Identifikationseinrichtung an den Behältnissen und/oder deren Verschlüssen das Identifikationselement anbringt, beispielsweise aufdruckt.

Auf diese Weise können auf das Behältnis 10 bezogene Daten ausgelesen und/oder ermittelt werden, wie beispielsweise ein Mindesthaltbarkeitsdatum oder auch Daten, welche für die in dem Behältnis befindliche Flüssigkeit charakteristisch sind. Diese Informationen werden bevorzugt in einer Speichereinrichtung 24 gespeichert.

Das Bezugszeichen 6 kennzeichnet eine Inspektionseinrichtung, welche dazu dient, während eines zweiten Inspektionsschritts I2 die Flüssigkeit in den Behältnissen 10 zu überprüfen. Diese zweite Inspektionseinrichtung 6 weist aber bevorzugt eine Sendeeinrichtung 62 auf, welche Strahlung ausgibt und eine Empfangseinrichtung 64, welche die durch die Behältnisse 10 getretene Strahlung aufnimmt.

Dabei kann es sich beispielsweise wie oben erwähnt, um eine Spektroskopievorrichtung handeln. Mittels dieser zweiten Inspektionseinrichtung 6 kann die Flüssigkeit innerhalb der Behältnisse 10 überprüft werden.

Das Bezugszeichen 26 kennzeichnet eine Vergleichseinrichtung, welche die in dem Behältnis festgestellte Flüssigkeit vergleicht, mit der Flüssigkeit, die sich aufgrund des Identifikationselements 12 in dem Behältnis befinden soll. Wenn diese Flüssigkeiten übereinstimmen, kann das Behältnis zur weiteren Verarbeitung weitertransportiert werden. Falls eine Abweichung festgestellt wird, kann eine Ausleiteinrichtung 8 das entsprechende Behältnis aus dem Transportstrom ausleiten.

Fig. 2 zeigt eine Darstellung eines Behältnisses. Dieses weist dabei einen Behältnisverschluss 11 auf, an dem ein Identifikationselement 12 wie etwa ein Matrixcode angeordnet ist. Das Bezugszeichen L kennzeichnet die Längsrichtung des Behältnisses 10.

Das Behältnis weist weiterhin einen Grundkörper 10a auf, der das Aufnahmevolumen für eine Flüssigkeit F bildet. Daneben ist im Stand der Technik an diesen Behältnissen üblicherweise ein Etikett angeordnet. Im Rahmen der Erfindung wird vorgeschlagen, auf dieses Etikett zu verzichten, damit das Behältnis auch unabhängig von seiner Drehrichtung mit der in Fig. 1 gezeigten Inspektionseinrichtung 6 inspizierbar ist.

Besonders bevorzugt, handelt es sich bei dem Behältnis um ein Behältnis aus einem für Licht transparenten Material. Insbesondere handelte es sich bei dem Behältnis um ein Kunststoffbehältnis oder ein Glasbehältnis.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Verfahren zur Überprüfung von mit Flüssigkeiten befüllten Behältnissen (10), wobei die Behältnisse (10) mittels einer Transporteinrichtung (2) entlang eines vorgegebenen Transportpfades transportiert werden und wobei in einem Identifikationsschritt (I1) wenigstens ein an dem Behältnis (10) angeordnetes Identifikationselement (12) inspiziert und/oder an dem Behältnis ein Identifikationselement (12) angebracht oder aufgebracht wird und anhand dieses Identifikationselements (12) wenigstens ein erster Parameter erfasst wird, der für dieses befüllte Behältnis charakteristisch ist, wobei dieser wenigstens eine Parameter für die in dem Behältnis gewünschte Flüssigkeit charakteristisch ist,
**dadurch gekennzeichnet, dass**
in einem Inspektionsschritt (I2) wenigstens ein weiterer für die tatsächlich in dem Behältnis befindliche Flüssigkeit charakteristischer Parameter ermittelt wird.

2. Verfahren nach Anspruch 1,
**dadurch gekennzeichnet, dass**
überprüft wird, ob die in dem Behältnis (10) gewünschte Flüssigkeit mit der tatsächlich in dem Behältnis (10) befindlichen Flüssigkeit übereinstimmt.

3. Verfahren nach dem vorangegangenen Anspruch,
**dadurch gekennzeichnet, dass**
die Überprüfung, ob die in dem Behältnis (10) gewünschte Flüssigkeit mit der tatsächlich in dem Behältnis (10) befindlichen Flüssigkeit übereinstimmt unter Verwendung des ersten Parameters und des zweiten Parameters erfolgt.

4. Verfahren nach wenigstens einem der vorangegangenen Ansprüche,
**dadurch gekennzeichnet, dass**
der weitere für die tatsächlich in dem Behältnis (10) befindliche Flüssigkeit charakteristische Parameter durch eine Inspektion der Flüssigkeit bestimmt wird.

5. Verfahren nach wenigstens einem der vorangegangenen Ansprüche,
**dadurch gekennzeichnet, dass**
der weitere für die tatsächlich in dem Behältnis befindliche Flüssigkeit charakteristische Parameter mittels einer Sensoreinrichtung (6) ermittelt wird, welche aus einer Gruppe von Sensoreinrichtungen (6) ausgewählt ist, welche Farbsensoreinrichtungen, Spektroskopieeinrichtungen, Laserinterferrometrieeinrichtungen und dergleichen enthält.

6. Verfahren nach wenigstens einem der vorangegangenen Ansprüche,
**dadurch gekennzeichnet, dass**
der Identifikationsschritt (I1) und der Inspektionsschritt (I2) zeitlich versetzt zueinander erfolgen und insbesondere der Inspektionsschritt (I2) nach dem Identifikationsschritt (11) erfolgt.

7. Verfahren nach wenigstens einem der vorangegangenen Ansprüche,
**dadurch gekennzeichnet, dass**
eine Ausleitung eines Behältnisses (10) aus einem Behältnisstrom erfolgt, wenn festgestellt wird, dass die in dem Behältnis (10) gewünschte Flüssigkeit nicht mit der tatsächlich in dem Behältnis (10) befindlichen Flüssigkeit übereinstimmt.

8. Verfahren nach wenigstens einem der vorangegangenen Ansprüche,
**dadurch gekennzeichnet, dass**
anhand des Identifikationselements wenigstens zwei und bevorzugt eine Vielzahl von Parametern erfasst werden, die für das Behältnis charakteristisch sind.

9. Verfahren nach dem vorangegangenen Anspruch,
**dadurch gekennzeichnet, dass**
die Parameter für eine Eigenschaft charakteristisch sind, welche aus einer Gruppe von Eigenschaften ausgewählt ist, welche abfülllinienbezogene Daten, Mindesthaltbarkeitsdaten und dergleichen enthält.

10. Verfahren nach dem vorangegangenen Anspruch,
**dadurch gekennzeichnet, dass**
die weiteren Parameter mit gespeicherten Daten verglichen werden wobei die gespeicherten Daten bevorzugt in einer LMS, in einem Rezept und/oder einer Speichereinrichtung und/oder einer Cloud gespeichert sind.

11. Verfahren nach wenigstens einem der vorangegangenen Ansprüche,
**dadurch gekennzeichnet, dass**
das Identifikationselement aus einer Gruppe von Identifikationselementen ausgewählt ist, welches Barcodes, Matrixcodes, Smartlabels, farblich codierte Verschlüsse und dergleichen aufweist und/oder das Identifikationselement an einem Behältnisverschluss des Behältnisses (10) angeordnet ist.

12. Vorrichtung (1) zur Überprüfung von mit Flüssigkeiten befüllten Behältnissen (10) mit einer Transporteinrichtung (2), welche die Behältnisse (10) entlang eines vorgegebenen Transportpfades transportiert, mit einer Identifikationseinrichtung (4), welches dazu geeignet und bestimmt ist, ein an dem Behältnis (10) angeordnetes Identifikationselement (12) zu identifizieren und/oder an dem Behältnis ein Identifikationselement anzubringen wobei anhand dieses Identifikationselements (12) wenigstens ein erster Parameter erfassbar ist, der für dieses befüllte Behältnis charakteristisch ist, wobei der wenigstens eine Parameter für die in dem Behältnis gewünschte Flüssigkeit charakteristisch ist,
**dadurch gekennzeichnet, dass**
die Vorrichtung (1) eine Inspektionseinrichtung (6) aufweist, welche dazu geeignet und bestimmt ist wenigstens ein weiteren für die tatsächlich in dem Behältnis (10) befindliche Flüssigkeit charakteristischer Parameter zu ermitteln.

13. Vorrichtung (1) nach dem vorangegangenen Anspruch,
**dadurch gekennzeichnet, dass**
die Vorrichtung (1) eine Auswerteeinrichtung aufweist, welche dazu geeignet und bestimmt ist, anhand des ersten Parameters und des zweiten Parameters zu überprüfen, ob die in dem Behältnis gewünschte Flüssigkeit mit der in dem Behältnis befindlichen Flüssigkeit übereinstimmt.

14. Vorrichtung (1) nach wenigstens einem der vorangegangenen Ansprüche,
**dadurch gekennzeichnet, dass**
die Inspektionseinrichtung (6) eine Sensoreinrichtung aufweist, welche aus einer Gruppe von Sensoreinrichtungen ausgewählt ist, welche Farbsensoreinrichtungen, Spektroskopieeinrichtungen, Laserinterferrometrieeinrichtungen und dergleichen enthält.

15. Behältnis (10), wobei dieses Behältnis mit einer Flüssigkeit und insbesondere einem Getränk befüllt ist und mit einem Verschluss (10a) verschlossen ist, wobei an dem Behältnis oder dem Verschluss ein Identifikationselement (12) angeordnet ist, welches dieses Behältnis identifiziert und wobei anhand dieses Identifikationselements (12) wenigstens ein erster Parameter erfassbar ist, der für dieses befüllte Behältnis charakteristisch ist, wobei der wenigstens eine Parameter für die in dem Behältnis gewünschte Flüssigkeit charakteristisch ist,
**dadurch gekennzeichnet, dass**
ein Grundkörper des Behältnisses etikettenlos und/oder aufdrucklos ausgeführt ist derart, dass die in dem Behältnis befindliche Flüssigkeit inspizierbar ist.
